## Europäisches Patentamt
## European Patent Office
## Office européen des brevets

(11) Veröffentlichungsnummer: **0 161 509**
**B1**

(12) **EUROPÄISCHE PATENTSCHRIFT**

(45) Veröffentlichungstag der Patentschrift:
13.07.88

(21) Anmeldenummer: 85104555.9

(22) Anmeldetag: 15.04.85

(51) Int. Cl.⁴: **B 29 D 23/22**

(54) Verfahren zur Herstellung von vulkanisierten Gummischläuchen.

(30) Priorität: 19.04.84 DE 3415028

(43) Veröffentlichungstag der Anmeldung:
21.11.85 Patentblatt 85/47

(45) Bekanntmachung des Hinweises auf die Patenterteilung:
13.07.88 Patentblatt 88/28

(84) Benannte Vertragsstaaten:
AT BE CH DE FR GB IT LI LU NL SE

(56) Entgegenhaltungen:
DE - A - 1 965 670
GB - A - 1 074 909
GB - A - 1 358 273
US - A - 3 883 384

(73) Patentinhaber: **VERITAS Gummiwerke AG,
Postfach 1580, D-6460 Gelnhausen (DE)**

(72) Erfinder: **Bischoff, Dieter, Bodenbender Strasse 46,
D-6460 Gelnhausen (DE)**
Erfinder: **Gast, Heinrich, Birkenstrasse 2,
D-6486 Brachttal 6 (DE)**
Erfinder: **Simon, Raimund, Dipl.-Ing., Häselweg 13,
D-6484 Birstein 7 (DE)**

(74) Vertreter: **Patentanwälte Grünecker, Dr. Kinkeldey, Dr.
Stockmair, Dr. Schumann, Jakob, Dr. Bezold, Meister,
Hilgers, Dr. Meyer-Plath, Maximilianstrasse 58,
D-8000 München 22 (DE)**

EP 0 161 509 B1

# Beschreibung

Die Erfindung bezieht sich auf ein Verfahren zur Herstellung von vulkanisierten Gummischläuchen, wobei die unvulkanisierten Rohschläuche mit einem geschmolzenen, festigkeitsverleihenden, thermoplastischen Kunststoff ummantelt werden, dessen Schmelzpunkt oberhalb der Vulkanisationstemperatur des Gummis liegt und der eine ausreichende Zugfestigkeit aufweist, worauf die Schläuche vulkanisiert werden, wonach die Ummantelung entfernt und zumindest teilweise wiederverwendet wird.

Ein solches Verfahren ist z.B. aus der DE-OS 19 65 670 bekannt. Bei diesem Verfahren wird der Schlauchrohling mit einer Ummantelung aus einem im plastischen Zustand aufgebrachten Polyamid versehen. Obwohl dieses Verfahren bei einmaliger Verwendung des Ummantelungswerkstoffes relativ gut arbeitet, leidet seine Wirtschaftlichkeit sehr darunter, daß der mehrfachen Wiederverwendung des Ummantelungswerkstoffes einige Hinderungsgründe entgegenstehen. So ist Polyamid beispielsweise bekannt dafür, daß es hygroskopisch ist. Das bedeutet, daß der Ummantelungswerkstoff während der Vulkanisation mit Wasserdampf selbst Wasser aufnimmt. Vor der Wiederverarbeitung muß daher der abgeschälte Kunststoffmantel vor der Plastifizierung erneut getrocknet werden. Das kostet Zeit und erhöht letztlich die Produktionskosten. Darüber hinaus weist Polyamid auch nur eine begrenzte Scherfestigkeit auf, was dazu führt, daß die Zugfestigkeit des Ummantelungsmaterials bei wiederholter Regranulation abnimmt, so daß nur ein Teil des bereits verwendeten Ummantelungsmaterials wiederverwendet werden kann, um die erforderliche Zugfestigkeitsgrenze nicht zu unterschreiten.

Darüber hinaus ist auch aus der DE-OS 27 15 493 ein Verfahren bekannt, bei dem als Ummantelungsmaterial Polysulfon verwendet wird. Neben den bereits oben genannten Nachteilen tritt bei dem Polysulfon dessen relativ hohe Schmelztemperatur von etwa 345°C hinzu. Diese hohe Schmelztemperatur bedingt, daß der unvulkanisierte Gummischlauch vor dem Ummanteln heruntergekühlt werden muß. Dadurch wird das Verfahren noch aufwendiger und kostenintensiver.

Diese Nachteile der bekannten Verfahren haben schließlich dazu geführt, daß sie sich gegenüber dem gängigen Ummantelungsverfahren, bei dem der unvulkanisierte Rohschlauch mit einer Bleiummantelung versehen wird, nicht durchgesetzt haben. Bedenkt man, daß beim Aufschmelzen des Bleis gesundheitsschädliche Bleidämpfe auftreten, so besteht ein erhöhtes Bedürfnis danach, Blei als Ummantelungswerkstoff für unvulkanisierte Rohschläuche zu ersetzen.

Der Erfindung liegt daher die Aufgabe zugrunde, ein Verfahren der eingangs genannten Art derart zu verbessern, daß es zum einen kostengünstig und in der Handhabung einfach ist, dennoch aber die Umweltbelastung auf ein Mindestmaß beschränkt.

Diese Aufgabe wird erfindungsgemäß dadurch gelöst, daß als Kunststoff für die Ummantelung Polyvinylidenfluorid (PVDF) eingesetzt wird, dessen Schmelzpunkt unterhalb der Zersetzungstemperatur des Gummis liegt und der unempfindlich ist gegenüber wiederholter Scherbeanspruchung.

Dieses Verfahren ist einfach und kostengünstig. Es hat den Vorteil, daß Polyvinylidenfluorid (PVDF) in einem Extruder aufgeschmolzen werden kann, so daß für das mit diesem Verfahren arbeitende Personal keine gesundheitlichen Beeinträchtigungen zu erwarten sind. Polyvinylidenfluorid (PVDF) ist deswegen für dieses Verfahren so gut geeignet, da dieser Kunststoff überraschenderweise sehr unempfindlich gegenüber wiederholter Scherbeanspruchung ist, der er im Granulator und anschließend in der Plastifizierungseinheit des Extruders unterworfen ist. Die Zugfestigkeit des Kunststoffes leidet darunter ebensowenig wie durch das Eindiffundieren von löslichen Gummibestandteilen während der Vulkanisation. Auch bei Verunreinigung durch abgeriebene Gummipartikel, die beim Abschälen des Kunststoffes an diesem hängenbleiben können, ändert sich bei einer Wiederaufbereitung des Kunststoffes seine Zugfestigkeit im wesentlichen nicht.

Nachfolgend wird ein Ausführungsbeispiel des erfindungsgemäßen Verfahrens anhand einer Zeichnung erläutert, wobei

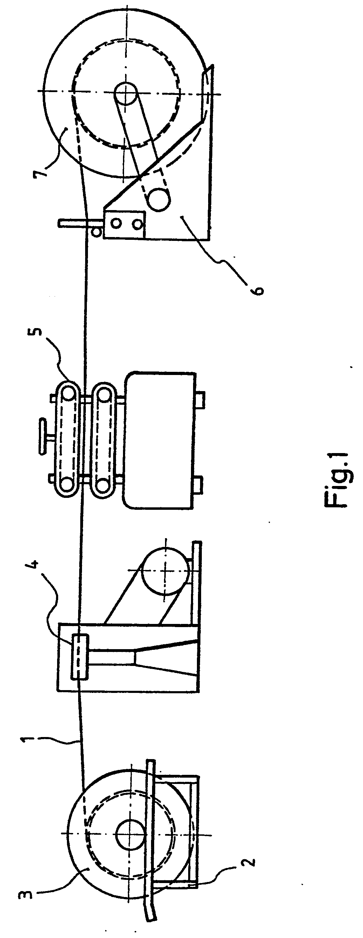

Fig. 1 eine schematische Darstellung eines Teils des Verfahrensablaufs zeigt.

Wie aus Fig. 1 ersichtlich, wird zunächst der unvulkanisierte Rohschlauch 1 mit Hilfe einer Abwickelvorrichtung 2 von einer Vorratstrommel 3 abgewickelt. Der Rohschlauch 1 läuft dann durch einen Kunststoffextruder 4, der im wesentlichen genauso wie der für die Bleiummantelung bekannte Bleiextruder aufgebaut sein kann. Beim Austritt aus dem Kunststoffextruder 4 wird auf den unvulkanisierten Rohschlauch 1 das Polyvinylidenfluorid PVDF) mit einer Temperatur von etwa 210°C und einer Schichtdicke von etwa 0,5 bis 0,6 mm aufgebracht.

Wärend des Aufbringens des PVDF wird der Rohschlauch 1 innen durch einen Kern oder durch Druckluft gestützt. Kurz nach Verlassen des Kunststoffextruders 4 verfestigt sich das PVDF und verleiht dem Rohschlauch 1 eine genügende Festigkeit, so daß der Schlauch mittels einer Vorschubeinrichtung 5 in Richtung einer auf einer Aufwickelvorrichtung 6 angebrachten Vulkanisationstrommel 7 transportiert und auf dieser aufgewickelt werden kann.

Der Abstand zwischen dem Kunststoffextruder 4 und der Aufwickelvorrichtung 6 ist unter Berücksichtigung der Vorschubsgeschwindigkeit so gewählt, daß die Temperatur der Kunststoffummantelung noch ausreichend hoch ist ( > 30°C), um die für den Aufwickelvorgang nötige Verformbarkeit zu gewährleisten.

Wenn die Vulkanisationstrommel 7 mit dem ummantelten Schlauch voll bewickelt ist, wird diese, nachdem der Schlauch abgeschnitten worden ist, von der Aufwickelvorrichtung 6 heruntergenommen, wonach der ummantelte Schlauch in nicht näher erläuterter, da bekannter Weise vulkanisiert wird. Die Vulkanisationstemperatur liegt bei ungefähr 150°C, bei der das zur Ummantelung verwendete PVDF noch eine ausreichende Zugfestigkeit aufweist, um

den mit Innendruck beaufschlagten Schlauch 1 stützen zu können.

Nach dem Vulkanisieren wird der Schlauch 1 von der Vulkanisationstrommel 7 abgewickelt, während gleichzeitig die Kunststoffummantelung von dem Schlauch 1 abgeschält wird.

Der abgeschälte Kunststoff kann, nachdem er granuliert und, falls die Vulkanisation unter Einwirkung von Wasserdampf stattgefunden hat, getrocknet worden ist, wieder dem Verfahren zugeführt werden.

Polyvinylidenfluorid ist ein z.B. unter dem Namen Dyflor 2000, von der Fa. Dynamit Nobel, bekannter Kunststoff.

Das erfindungsgemäße Verfahren kann außer zur Ummantelung von Gummischläuchen selbstverständlich auch zur Ummantelung von Gummikabeln und -strängen benutzt werden.

## Patentanspruch

1. Verfahren zur Herstellung von vulkanisierten Gummischläuchen, wobei die unvulkanisierten Rohschläuche mit einem geschmolzenen, festigkeitsverleihenden, thermoplastischen Kunststoff ummantelt werden, dessen Schmelzpunkt oberhalb der Vulkanisationstemperatur des Gummis liegt und der eine ausreichende Zugfestigkeit aufweist, worauf die Schläuche vulkanisiert werden, wonach die Ummantelung entfernt und zumindest teilweise wiederverwendet wird, dadurch gekennzeichnet, daß als Kunststoff für die Ummantelung Polyvinylidenfluorid (PVDF) eingesetzt wird, dessen Schmelzpunkt unterhalb der Zersetzungstemperatur des Gummis liegt und der unempfindlich ist gegenüber wiederholter Scherbeanspruchung.

## Claim

1. A method of producing vulcanized rubber tubes, the unvulcanized rough tubes being sheathed with a melted strength-imparting thermoplastic, the melting point of which is above the vulcanization temperature of the rubber and which has an adequate tensile strength, whereupon the tubes are vulcanized, after which the sheathing is removed and at least partially re-used, characterised in that the plastic used for the sheathing is polyvinylidene fluoride (PVDF), the melting point of which is below the decomposition temperature of the rubber and which is insensitive to repeated shear stress.

## Revendication

1. Procédé de fabrication de tubes flexibles de caoutchouc vulcanisé, les tubes flexibles bruts non vulcanisés étant enrobés d'un thermoplastique fondu conférant une certaine résistance, ayant un point de fusion supérieur à la température de vulcanisation du caoutchouc er présentant une résistance suffisante à la traction, les tubes flexibles étant ensuite vulcanisés, puis la gaine enlevée et réutilisée au moins partiellement, caractérisé en ce qu'il est utilisé comme matière plastique d'enrobage du fluorure de polyvinylidène (PVDF) dont le point de fusion est inférieur à la température de décomposition du caoutchouc et qui est insensible à des sollicitations répétées au cisaillement.

Fig.1